# EUROPEAN PATENT APPLICATION

(11) **EP 4 773 390 A1**
(43) Date of publication of application: **08.07.2026**
(21) Application number: 25794784.6
(22) Date of filing: 25.03.2025
(51) Int. Cl.: H01M 50/367, H01M 50/317, H01M 50/342, H01M 50/30

(54) **BATTERY PACK AND DEVICE COMPRISING SAME**

(30) Priority: 24.04.2024 KR 20240054635
(71) Applicant: LG Energy Solution, Ltd., Seoul 07335 (KR)
(72) Inventor: SON, Hong Se, Daejeon 34122 (KR)
(74) Representative: Plasseraud IP
(86) International application number: PCT/KR2025/095079
(87) International publication number: WO 2025/226096

(57) **Abstract**

A battery pack according to embodiments of the present disclosure includes: a pack frame on which a plurality of battery cell assemblies are mounted; at least one venting part located on a side face of the pack frame, wherein the side face of the pack frame is a cavity structure in which an empty space is formed between an outer face of the pack frame and an inner face of the pack frame; at least one pair of guide plates are disposed in the empty space formed on the side face of the pack frame formed with the venting part; the pair of guide plates are disposed symmetrically with each other with the venting part interposed between them; and the pair of guide plates are disposed so as to have an inclination that is lifted in a direction toward the venting part with respect to the lower part of the pack frame.

## Description

### [TECHNICAL FIELD]

### Cross-Reference to Related Application(s)

This application claims priority to and the benefit of Korean Patent Application no. KR10-2024-0054635, filed on April 24, 2024, with the Korean Intellectual Property Office, the disclosure of which is hereby incorporated by reference in its entirety

The present disclosure relates to a battery pack and a device including same, and more particularly, to a battery pack that can not only prevent emission of spark particles generated in battery cells to the outside of the battery pack when a thermal runaway phenomenon occurs inside the battery pack, but also easily discharge gas to the outside when the pressure inside the battery pack reaches a specific pressure or higher, and a device including same.

### [BACKGROUND ART]

Secondary batteries which are highly applicable to various products and exhibit superior electrical properties such as high energy density, etc. are commonly used not only in portable devices but also in electric vehicles or hybrid electric vehicles driven by electrical power sources. Such a secondary battery is getting a lot of attention as a novel energy source for enhancing environment friendliness and energy efficiency, in that it has a primary advantage of remarkable reducing the use of fossil fuels, and also generates no by-products from the use of energy.

Presently, commercially available batteries include nickel-cadmium batteries, nickel-hydrogen batteries, nickel-zinc batteries, and lithium secondary batteries. Of these batteries, lithium secondary batteries are emerging as the most popular, as they do not suffer from the memory effect, and therefore, are freely chargeable/dischargeable, have low self-discharge rates, and have high energy density, as compared to nickel-based batteries.

In general, according to the shapes of exterior cases, lithium secondary batteries may be classified into cylindrical or prismatic secondary batteries fabricated by mounting the electrode assembly in a metal can, and pouch-shaped secondary batteries fabricated by mounting the electrode assembly in a pouch made of an aluminum laminate sheet.

Recently, along with a continuous rise of the necessity for a large-capacity secondary battery structure, including the utilization of the secondary battery as an energy storage source, there is a growing demand for a battery pack of a middle- or large-sized module structure which is an assembly of battery modules in which a plurality of secondary batteries are connected in series/parallel. In such a battery module, a large number of battery cells are connected to each other in series or in parallel to form a battery cell stack, thereby improving capacity and output. In addition, a plurality of battery modules may be mounted together with various control and protection systems such as BMS (battery management system) and a cooling system to form a battery pack.

The battery pack is composed of a structure in which multiple battery modules are combined together and thus, if overvoltage, overcurrent, or overheating occurs in some of the battery modules, the safety and operating efficiency of the battery pack may be problematic. In particular, in order to improve driving distance, the battery pack capacity tends to gradually increase, and the internal energy of the pack is also increasing accordingly, and it is necessary to design a structure that satisfies the strengthened safety standards and ensures the safety of the vehicle and driver.

In connection therewith, according to electric vehicle regulations that have been strengthened in recent years, it is required that flames must not be observed outside the battery pack within five minutes of occurrence of a thermal runaway of battery cells inside the battery pack. In particular, when a thermal runaway of battery cells occurs, spark particles may be generated due to a short circuit inside the cells. In this case, the spark particles act as an ignition source, and there is a problem that flames occur when they encounter the vent gas composed of vaporized electrolyte and the oxygen inside and outside the battery pack.

Therefore, there is a growing need to develop a battery pack that can not only prevent emission of spark particles present inside the battery pack to the outside of the battery pack when a thermal runaway occurs in a battery cell, but also easily discharge gas to the outside when the pressure inside the battery pack reaches a specific pressure or higher.

### [DETAILED DESCRIPTION OF THE INVENTION]

### [Technical Problem]

It is an object of the present disclosure to provide a battery pack that can not only prevent emission of spark particles generated in battery cells to the outside of the battery pack when a thermal runaway phenomenon occurs inside the battery pack, but also easily discharge gas to the outside when the pressure inside the battery pack reaches a specific pressure or higher, and a device including same.

The objects of the present disclosure are not limited to the aforementioned objects, and other objects which are not described herein should be clearly understood by those skilled in the art from the following detailed description and the accompanying drawings.

### [Technical Solution]

According to certain aspects of the present disclosure, there is provided a battery pack comprising: a pack frame on which a plurality of battery cell assemblies are mounted; at least one venting part located on a side face of the pack frame, wherein the side face of the pack frame is a cavity structure in which an empty space is formed between an outer face of the pack frame and an inner face of the pack frame, wherein at least one pair of guide plates are disposed in the empty space formed on the side face of the pack frame formed with the venting part, wherein the pair of guide plates are disposed symmetrically with each other with the venting part interposed between them, and wherein the pair of guide plates are disposed so as to have an inclination that is lifted in a direction toward the venting part with respect to the lower part of the pack frame.

The at least one pair of guide plates may be disposed to be spaced apart from each other in a height direction of the pack frame with respect to the venting part.

The at least one pair of guide plates may be disposed such that the inclination angle that is lifted in a direction toward the venting part with respect to the lower part of the pack frame is the same, or becomes larger as they are located toward the upper part of the venting part.

The at least one pair of guide plates comprises a pair of first guide plates and a pair of second guide plates, and the pair of first guide plates and the pair of second guide plates may be disposed to be spaced apart from each other in the height direction of the pack frame with respect to the venting part.

The pair of first guide plates may be disposed adjacent to the upper part of the venting partn, and the pair of second guide plates may be disposed adjacent to the lower part of the venting part.

The pair of first guide plates may be lifted at a first inclination angle in a direction toward the venting part with respect to the lower part of the pack frame, the pair of second guide plates may be lifted at a second inclination angle in a direction toward the venting part with respect to the lower part of the pack frame, and the first inclination angle may be equal to or greater than the second inclination angle.

The venting part may be coupled to a venting hole passing through the side face of the pack frame, and the venting part may be a relief valve.

The pair of guide plates may be disposed so as to have an inclination that is lifted in a direction toward the venting part with respect to the lower part of the pack frame while being placed between the venting holes.

The venting hole may comprise a pair of first venting holes and second venting holes formed at the same position on the side face of the pack frame, the first venting hole may be formed on the outer side of the side face of the pack frame, the second venting hole may be formed on the inner side of the side face of the pack frame, and the venting part may be coupled to the first venting hole.

The battery pack may further comprise a filter part located between the venting part and the first venting hole.

According to certain other aspects of the present disclosure, there is provided a device comprising the above-mentioned battery pack.

### [Advantageous Effects]

According to certain embodiments, a battery pack of the present disclosure and a device including same have a cavity structure in which a side face of the pack frame has a cavity space formed between the outer face of the pack frame and the inner face of the pack frame, and at least one pair of guide plates are disposed in the empty space formed on the side face of the pack frame formed with the venting part, so that when a thermal runaway phenomenon occurs inside the battery pack, spark particles generated in battery cells are prevented from being emitted to the outside of the battery pack, and when the pressure inside the battery pack reaches a specific pressure or higher, gas can be easily discharged to the outside.

The effects of the present disclosure are not limited to the effects mentioned above and additional other effects not described above will be clearly understood from the detailed description and the accompanying drawings by those skilled in the art.

### [BRIEF DESCRIPTION OF THE DRAWINGS]

FIG. 1 is a perspective view showing a battery pack according to certain embodiments of the present disclosure.
FIG. 2 is an enlarged perspective view showing a side face of a pack frame where a venting part of the battery pack of FIG. 1 is located.
FIG. 3 is a perspective view showing a state where the venting part of FIG. 2 is opened.
FIG. 4 is a diagram showing a part of a cross section cut along the a-a' axis of FIG. 1.
FIG. 5 is a diagram showing a part of a cross section cut along the b-b' axis of FIG. 1.
FIG. 6 is a front view of the cross section of FIG. 4 as viewed from the front.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated. The drawings depict the thickness in an enlarged scale to clearly show different layers and regions. Further, the drawings exaggerate the thickness of a certain layer or region to facilitate the description thereof.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

Now, a battery pack according to certain embodiments of the present disclosure will be described.

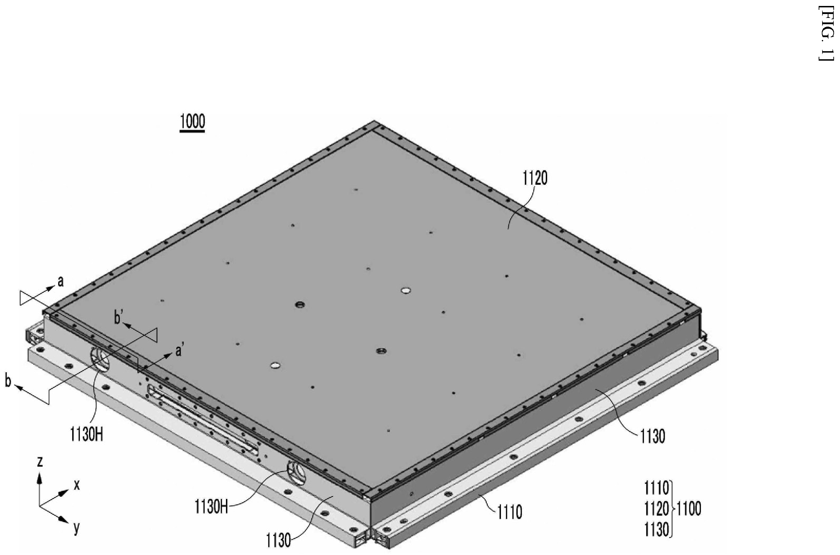

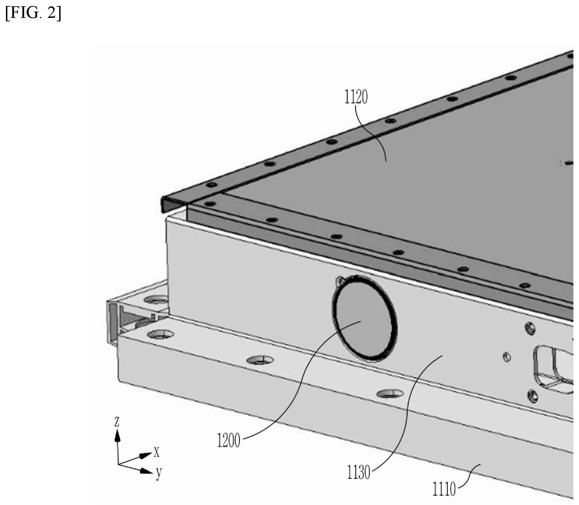

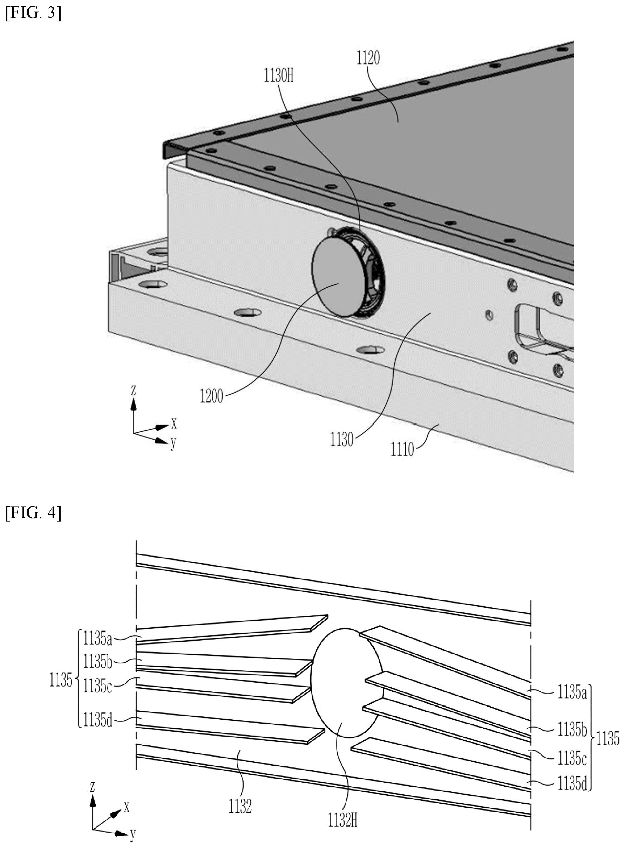

FIG. 1 is a perspective view showing a battery pack according to certain embodiments of the present disclosure. FIG. 2 is an enlarged perspective view showing a side face of a pack frame where a venting part of the battery pack of FIG. 1 is located. FIG. 3 is a perspective view showing a state where the venting part of FIG. 2 is opened.

Referring to FIGS. 1 to 3, a battery pack 1000 according to certain embodiments of the present disclosure includes a pack frame 1100 on which a plurality of battery cell assemblies (not shown) are mounted; and at least one venting part 1200 located on a side face of the pack frame 1100. Here, the position and number of the venting parts 1200 are not limited to those shown in the drawings, and may be appropriately applied in different ways as needed.

Here, the pack frame 1100 may include a lower pack frame 1110 on which a plurality of battery cell assemblies (not shown) are mounted, an upper pack frame 1120 that covers the upper part of the plurality of battery cell assemblies (not shown), a side pack frame 1130 that ) that covers the side face of the plurality of battery cell assemblies (not shown). Here, the lower pack frame 1110 may be used interchangeably with the lower face of the pack frame 1100, the upper pack frame 1120 may be used interchangeably with the upper face of the pack frame 1100, and the side pack frame 1130 may be used interchangeably with the side face of the pack frame 1100.

More specifically, the upper pack frame 1120 may cover the upper part of the lower pack frame 1110 in a state where the plurality of battery cell assemblies (not shown) are mounted on the lower pack frame 1110. In addition, the side pack frame 1130 is disposed along the outer peripheral side of the lower pack frame 1110, and may extend from the bottom part of the lower pack frame 1110 toward the upper pack frame 1120. Here, the lower pack frame 1110 and the upper pack frame 1120 can be coupled with each other by a method such as welding or bonding with the side pack frame 1130 interposed between them, thereby sealing the inside of the battery pack 1000.

Further, although not shown in detail in the drawings, the battery pack 1000 according to the present embodiments may have a plurality of battery cell assemblies (not shown) mounted therein. Here, the plurality of battery cell assemblies (not shown) may be mounted in the lower pack frame 1100, the plurality of battery cell assemblies (not shown) may be partitioned from each other through separate internal frames located inside the lower pack frame 1100, and the arrangement direction of the plurality of battery cell assemblies (not shown) may also be appropriately changed as needed.

In one embodiment, the plurality of battery cell assemblies (not shown) include a battery cell stack (not shown) in which a plurality of battery cells are stacked, and a module frame (not shown) that houses the battery cell stack (not shown).

The battery cell is preferably a pouch-type battery cell. In one embodiment, the battery cell may be prepared by housing an electrode assembly in a pouch case of a laminate sheet including a resin layer and an inner layer, and then thermally fusing the sealing part of the pouch case. The battery cell may be formed in a rectangular sheet-shaped structure. The battery cell may be formed in a plurality of numbers, and the plurality of battery cells may be stacked so as to be electrically connected to each other, thereby forming a battery cell stack (not shown). Here, the number of battery cells constituting the battery cell stack (not shown) may be adjusted depending on the case.

The module frame (not shown) may include an upper cover and a U-shaped frame. Here, the U-shaped frame may include a bottom part and two side face parts extending upward from both ends of the bottom part. In this case, the bottom part may cover the lower face of the battery cell stack (not shown), and the side face parts may cover the side faces of the battery cell stack (not shown). The upper cover and the U-shaped frame may be coupled by welding or the like in a state where the corresponding corner portions are in contact with each other, thereby forming a structure that covers the upper, lower, left, and right faces of the battery cell stack (not shown). For this purpose, the upper cover and the U-shaped frame may be made of a metal material having a predetermined strength.

However, the structure of the module frame (not shown) is not limited thereto, and in another embodiment, the module frame (not shown) may have a mono-frame structure. Here, the mono-frame may be in the form of a metal plate in which the upper face, lower face, and both side faces are integrated. The mono frame can be manufactured by extrusion molding. Furthermore, the structure of the module frame (not shown) may be provided as an L-shaped frame structure in addition to the mono frame or U-shaped frame, and may be provided as various structures not described in the above-described embodiments.

In addition, the plurality of battery cell assemblies (not shown) further include a busbar frame located at the front and rear faces of the battery cell stack (not shown), respectively, and an end plate covering the busbar frame. Here, a busbar (not shown) electrically connected to a battery cell stack (not shown) may be located on the busbar frame. Thereby, the end plate may physically protect the battery cell stack (not shown) and other electrical components from external impact.

However, without being limited thereto, the plurality of battery cell assemblies (not shown) may have a module-less structure in which the module frame (not shown) is omitted, and the battery pack 1000 of the present embodiments may have a cell-to-pack structure.

Referring to FIGS. 1 to 3, in the battery pack 1000 according to the present embodiments, the venting part 1200 is coupled to a venting hole 1130H passing through the side face of the pack frame 1100, and the venting part 1200 may be a relief valve.

The venting part 1200 is a relief valve, which can be opened when the pressure inside the battery pack 1000 reaches a certain level or higher, and can be closed when it reaches a certain level or lower. However, the structure of the venting part 1200 is not limited thereto, and can be included in the present embodiments as long as it is configured to allow gas inside the battery pack 1000 to be discharged to the outside in a situation where the inside of the battery pack 1000 has a high pressure, similar to as a thermal runaway.

As a result, in the battery pack 1000 according to the present embodiments, when the internal pressure of the pack frame 1100 reaches a certain level or higher, the gas generated inside the battery pack 1000 is appropriately discharged to the outside through the venting part 1200, thereby preventing the explosion of the battery pack 1000 due to an increase in the internal pressure of the pack frame 1100 and further damage caused thereby.

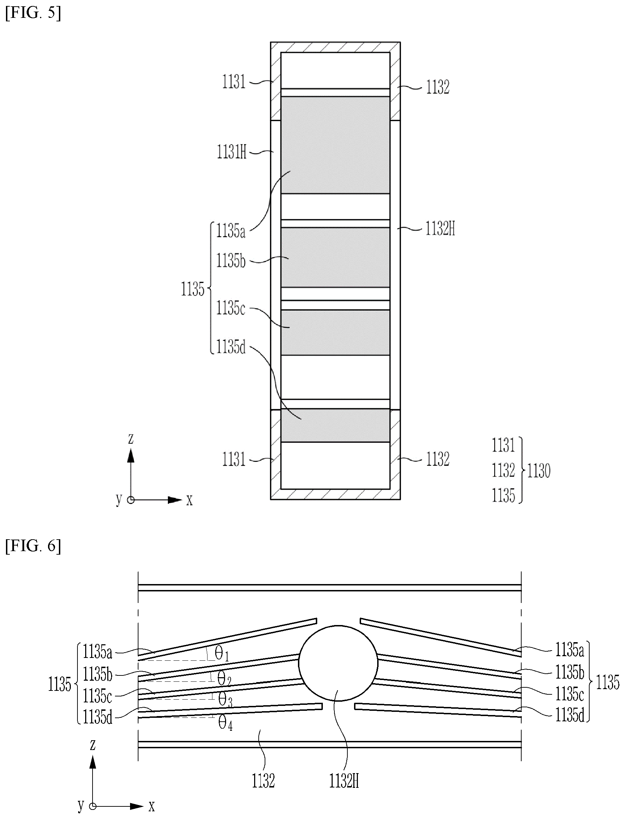

FIG. 4 is a diagram showing a part of a cross section cut along the a-a' axis of FIG. 1. FIG. 5 is a diagram showing a part of a cross section cut along the b-b' axis of FIG. 1. FIG. 6 is a front view of the cross section of FIG. 4 as viewed from the front.

Referring to FIGS. 4 and 5, the side face of the pack frame 1100 may have a cavity structure in which an empty space is formed between the outer face of the pack frame 1100 and the inner face of the pack frame 1100. In other words, the side pack frame 1300 may have a cavity structure in which an empty space is formed between the outer face 1131 of the side pack frame 1130 and the inner face 1132 of the side pack frame 1130. That is, the cavity structure here may mean that the outer face 1131 of the side pack frame 1130 and the inner face 1132 of the side pack frame 1130 are spaced apart from each other, and a separate material or the like is not filled between the outer face 1131 of the side pack frame 1130 and the inner face 1132 of the side pack frame 1130.

The venting hole 1130H may include a pair of first venting holes 1131H and second venting holes 1132H formed at the same position on the side face of the pack frame 1100. The first venting hole 1131H may be formed on the outer side of the side face of the pack frame 1100, and the second venting hole 1132H may be formed on the inner side of the side face of the pack frame. That is, in the side pack frame 1130, the first venting hole 1131H may be formed on the outer face 1131 of the side pack frame 1130, and the second venting hole 1132H may be formed on the inner surface of the side pack frame 1130.

The venting part 1200 may also be coupled to the first venting hole 1131H. In other words, the second venting hole 1132H may be opened toward the inside of the pack frame 1100.

Thereby, in the battery pack 1000 according to the present embodiments, before the internal pressure of the pack frame 1100 reaches a certain level or higher, some of the gas generated inside the battery pack 1000 may flow into the empty space inside the side pack frame 1130 through the second venting hole 1132H, and sink to the lower part of the empty space inside the pack frame 1130 along the direction of gravity. In particular, when a thermal runaway phenomenon occurs inside the battery pack 1000, spark particles generated in the battery cells may flow into the empty space inside the side pack frame 1130 through the second venting hole 1132H, which can prevent spark particles from being accumulated in the venting part 1200 at a critical point or higher.

Further, in the battery pack 1000 according to the present embodiments, after the internal pressure of the pack frame 1100 reaches a certain level or higher, spark particles generated in the battery cells when a thermal runaway phenomenon occurs inside the battery pack 1000 are already accumulated in the empty space inside the side pack frame 1130 through the second venting hole 1132H, thereby capable of preventing or minimizing the discharge of spark particles to the outside of the battery pack 1000.

Referring to FIGS. 4 to 6, at least one pair of guide plates 1135 may be disposed in the empty space formed on the side face of the pack frame 1100 having the venting part 1200 formed therein.

Here, at least one pair of guide plates 1135 may be made of the same material as the pack frame 1100, and may be integrated with the pack frame 1100. In one embodiment, a pair of guide plates 1135 may be plates extending in a straight line as shown in FIGS. 4 and 6. However, the shape of the pair of guide plates 1135 is not limited thereto, and can be applied to the present embodiments as long as it can guide the flow of sparkle particles flowing into the empty space inside the pack frame 1100.

More specifically, in the empty space formed inside the side frame 1130, at least a pair of guide plates 1135 may be disposed symmetrically with each other with the venting part 1200 interposed between them. In one embodiment, a pair of guide plates 1135 may be disposed symmetrically with respect to the center of the venting part 1200.

Further, a pair of guide plates 1135 may be disposed so as to have an inclination that is lifted in a direction toward the venting part 1200 with respect to the lower part of the pack frame 1100. In other words, a pair of guide plates 1135 may be disposed so as to have an inclination that is lifted in a direction toward the venting part 1200 with respect to the lower part of the pack frame 1100 while being placed between the venting holes 1130H. In one embodiment, as shown in FIGS. 4 and 5, a pair of guide plates 1135 may be disposed so as to have an inclination that is lifted in a z-axis direction toward the venting part 1200 with respect to the x-y plane, such as the extension direction of the lower part of the pack frame 1100.

Thereby, in the battery pack 1000 according to the present embodiments, the pair of guide plates 1135 can guide spark particles having flowed into the empty space inside the side pack frame 1130 so as to skink to the lower part of the empty space inside the pack frame 1100 along the inclination of the pair of guide plates 1135, thereby allowing spark particles to disperse over a wider area while preventing spark particles from being accumulated at a specific location on the guide plates 1135. In addition, the spark particles sunk to the lower part of the empty space inside the pack frame 1100 can be restricted from moving by the pair of guide plates 1135. That is, even if a flow of gas discharged through the venting part 1200 occurs, the pair of guide plates 1135 can more effectively prevent or minimize the spark particles from being discharged to the outside of the battery pack 1000.

Furthermore, at least one pair of guide plates 1135 may include a pair of first guide plates 1135a and a pair of second guide plates 1135b. In one embodiment, as shown in FIGS. 4 to 6, at least one pair of guide plates 1135 may include a pair of first guide plates 1135a, a pair of second guide plates 1135b, a pair of third guide plates 1135c, and a pair of fourth guide plates 1135d. However, the number of the pair of guide plates 1135 is not limited thereto, and the number may be appropriately adjusted as needed.

Furthermore, at least one pair of guide plates 1135 may be disposed to be spaced apart from each other in the height direction of the pack frame 1100 with respect to the venting part 1200. More specifically, one pair of first guide plates 1135a and one pair of second guide plates 1135b may be disposed to be spaced apart from each other in the height direction of the pack frame 1100 with respect to the venting part 1200. In one embodiment, as shown in FIGS. 4 to 6, one pair of first guide plates 1135a, one pair of second guide plates 1135b, one pair of third guide plates 1135c, and one pair of fourth guide plates 1135d may be disposed to be spaced apart from each other in the height direction of the pack frame 1100, respectively. Here, the height direction of the pack frame 1100 may mean the z-axis direction, as shown in FIGS. 4 to 6.

In a battery pack 1000 according to certain other embodiments of the present disclosure, at least one pair of guide plates 1135 may be disposed so that the inclination angle that is lifted in a direction toward the venting part 1200 with respect to the lower part of the pack frame 1100 is the same, or becomes larger as they are located toward the upper part of the venting part 1200.

More specifically, a pair of first guide plates 1135a may be disposed adjacent to the upper part of the venting part 1200, and a pair of second guide plates 1135b may be disposed adjacent to the lower part of the venting part 1200. In this case, a pair of first guide plates 1135a are lifted at a first inclination angle (θ₁) in a direction toward the venting part 1200 with respect to the lower part of the pack frame 1100, and a pair of second guide plates 1135b are lifted at a second inclination angle (θ₂) in a direction toward the venting part 1200 with respect to the lower part of the pack frame 1100, wherein the first inclination angle (θ₁) may be equal to or greater than the second inclination angle (θ₂).

In one embodiment, as shown in FIGS. 4 to 6, a pair of third guide plates 1135c are lifted at a third inclination angle (θ₃) in a direction toward the venting part 1200 with respect to the lower part of the pack frame 1100, and a pair of fourth guide plates 1135d are lifted at a fourth inclination angle (θ₄) in a direction toward the venting part 1200 with respect to the lower part of the pack frame 1100, wherein the third inclination angle (θ₃) may be equal to or greater than the fourth inclination angle (θ₄). That is, as shown in FIGS. 4 to 6, in the present embodiments, the difference in the size of the inclination angles may be "first inclination angle (θ₁) ≥ second inclination angle (θ₂) ≥ third inclination angle (θ₃) ≥ fourth inclination angle (θ₄)."

Thereby, in the battery pack 1000 according to the present embodiments, the inclination angle of at least one pair of guide plates 1135 is disposed to be the same, or become larger as it is located toward the upper part of the venting part 1200, so that at least one pair of guide plates 1135 can guide the sparkle particles to flow more quickly toward the lower part of the pack frame 1100 as the inflow position of the sparkle particles is relatively high.

The battery pack 1000 according to certain other embodiments of the present disclosure may further comprise a filter part (not shown) located between the venting part 1200 and the first venting hole 1131H. In one embodiment, the filter part (not shown) may be a structure such as a mesh plate.

Thereby, in the battery pack 1000 according to the present embodiments, the filter part (not shown) located between the venting part 1200 and the first venting hole 1131H can make it possible to more effectively prevent or minimize spark particles from being discharged to the outside of the battery pack 1000 due to the flow of gas discharged through the venting part 1200.

A device according to certain other aspects of the present disclosure includes the above-mentioned battery pack. Such a device can be applied to various transportation vehicles such as electric bicycles, electric vehicles, and hybrids. However, the present disclosure is not limited thereto, and can be applied to various devices capable of using a battery module and a battery pack including the same, which also falls within the scope of the present disclosure.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Symbols]

1000: battery pack
1100: pack frame
1110: lower pack frame
1120: upper pack frame
1130: side pack frame
1130H: venting hole
1135: guide plate
1200: venting part

## Claims

1. A battery pack comprising:
a pack frame on which a plurality of battery cell assemblies are mounted;
at least one venting part located on a side face of the pack frame,
wherein the side face of the pack frame is a cavity structure in which an empty space is formed between an outer face of the pack frame and an inner face of the pack frame,
wherein at least one pair of guide plates are disposed in the empty space formed on the side face of the pack frame formed with the venting part,
wherein the pair of guide plates are disposed symmetrically with each other with the venting part interposed between them, and
wherein the pair of guide plates are disposed so as to have an inclination that is lifted in a direction toward the venting part with respect to the lower part of the pack frame.

2. The battery pack according to claim 1,
wherein the at least one pair of guide plates are disposed to be spaced apart from each other in a height direction of the pack frame with respect to the venting part.

3. The battery pack according to claim 2,
wherein the at least one pair of guide plates are disposed such that the inclination angle that is lifted in a direction toward the venting part with respect to the lower part of the pack frame is the same, or becomes larger as they are located toward the upper part of the venting part.

4. The battery pack according to claim 1,
wherein the at least one pair of guide plates comprises a pair of first guide plates and a pair of second guide plates, and
the pair of first guide plates and the pair of second guide plates are disposed to be spaced apart from each other in the height direction of the pack frame with respect to the venting part.

5. The battery pack according to claim 4,
wherein the pair of first guide plates are disposed adjacent to the upper part of the venting partn, and the pair of second guide plates are disposed adjacent to the lower part of the venting part.

6. The battery pack according to claim 5,
wherein the pair of first guide plates are lifted at a first inclination angle in a direction toward the venting part with respect to the lower part of the pack frame,
the pair of second guide plates are lifted at a second inclination angle in a direction toward the venting part with respect to the lower part of the pack frame, and
the first inclination angle is equal to or greater than the second inclination angle.

7. The battery pack according to claim 1,
wherein the venting part is coupled to a venting hole passing through the side face of the pack frame, and
the venting part is a relief valve.

8. The battery pack according to claim 7,
wherein the pair of guide plates are disposed so as to have an inclination that is lifted in a direction toward the venting part with respect to the lower part of the pack frame while being placed between the venting holes.

9. The battery pack according to claim 7,
wherein the venting hole comprises a pair of first venting holes and second venting holes formed at the same position on the side face of the pack frame,
the first venting hole is formed on the outer side of the side face of the pack frame,
the second venting hole is formed on the inner side of the side face of the pack frame, and
the venting part is coupled to the first venting hole.

10. The battery pack according to claim 8,
further comprising a filter part located between the venting part and the first venting hole.

11. A device comprising a battery pack according to claim 1.
